**Europäisches Patentamt**

**European Patent Office**

**Office européen des brevets**

(19)

(11) Veröffentlichungsnummer: **0 204 976 B1**

## (12) EUROPÄISCHE PATENTSCHRIFT

(45) Veröffentlichungstag der Patentschrift:
16.01.91 Patentblatt 91/03

(21) Anmeldenummer: **86106411.1**

(22) Anmeldetag: **12.05.86**

(51) Int. Cl.⁵: **B23H 7/10**

(54) Drahtführungsanordnung zur Führung einer Drahtelektrode einer Elektroerosionsmaschine.

(30) Priorität: **07.06.85 DE 3520540**

(43) Veröffentlichungstag der Anmeldung:
**17.12.86 Patentblatt 86/51**

(45) Bekanntmachung des Hinweises auf die
Patenterteilung:
**16.01.91 Patentblatt 91/03**

(84) Benannte Vertragsstaaten:
**CH DE FR GB IT LI LU SE**

(56) Entgegenhaltungen:
**US-A- 4 243 864**
**MACHINES PRODUCTION, Nr. 110, 14. Mai**
**1975, Seiten 15-17; "Electro-érosion:**
**découpage par fil"**

(73) Patentinhaber: **AG für industrielle Elektronik**
**AGIE Losone bei Locarno**
**CH-6616 Losone/Locarno (CH)**

(72) Erfinder: **Derighetti, René**
**Via Reslina 34**
**CH-6616 Losone (CH)**
Erfinder: **Tobler, Karl**
**CH-6673 Maggia (CH)**

(74) Vertreter: **EGLI-EUROPEAN PATENT**
**ATTORNEYS**
**Widenmayerstrasse 5**
**D-8000 München 22 (DE)**

EP 0 204 976 B1

## Beschreibung

Die Erfindung bezieht sich auf eine Drahtführungsanordnung gemäss dem Oberbegriff des Patentanspruches 1. Will man auf einer herkömmlichen "Drahtschneidemaschine" gleichzeitig mehrere gleiche Teile bearbeiten, was den Vorteil hat, dass die Maschine nur einmal eingerichtet werden muss und die Bearbeitungszeiten kürzer werden, so tritt das Problem auf, dass die Distanz zwischen der Drahtführung am Einlauf und derjenigen am Auslauf der Erosionsstrecke sehr gross wird, was sich negativ auf die Genauigkeit der Bearbeitung auswirkt.

Aufgabe der Erfindung ist es daher, die Drahtführungsanordnung der eingangs genannten Art dahingehend zu verbessern, dass ein genaues, gleichzeitiges Bearbeiten von mehreren gleichen Teilen möglich ist. Dabei soll das Auswechseln der Drahtführungselemente einfach und ohne spezielle Justierung möglich sein.

Diese Aufgabe wird durch die im kennzeichnenden Teil des Patentanspruches 1 angegebenen Merkmale gelöst. Vorteilhafte Ausgestaltungen und Weiterbildungen der Erfindung sind den Unteransprüchen zu entnehmen.

Grundgedanke der Erfindung ist es also, die Drahtelektrode im Verlauf der Erosionsstrecke mehrfach abzustützen bzw. zu führen. Rechnet man die einlauf-und auslaufseitigen Drahtführungen mit, so sind nach der Erfindung also mindestens drei Drahtführungen vorhanden.

Mit Anspruch 3 wird erreicht, dass für jedes Werkstück zwei Drahtführungen vorhanden sind, gleichwohl die Anzahl der Drahtführungen nur um 1 grösser ist als die der Werkstücke.

Mit Anspruch 4 wird erreicht, dass die einzelnen Drahtführungen einfach ausgewechselt werden können und gleichwohl präzise ausgerichtet bzw. justiert sind, ohne dass eine Feinjustierung erforderlich ist. Eine präzise Ausrichtung in der Ebene der Führungsplatte erhält man mit den Merkmalen der Ansprüche 5 bzw. 6.

Ein einfaches Auswechseln und gleichwohl sicheres "Einspannen" der Drahtführungen wird mit der Ausbildung der Feder der Ansprüche 7 bis 11 erreicht. Diese Art der Feder kann durch Bearbeiten der Führungsplatte in einer Elektroerosionsmaschine hergestellt werden.

Mit den Merkmalen des Anspruches 12 wird ein problemloses Einlegen der Drahtelektrode gewährleistet.

Mit Anspruch 13 wird die Drahtelektrode besser gespannt.

Mit den Merkmalen des Anspruches 14 wird eine bessere Führung und damit Schwingungsdämpfung der Drahtelektrode am ein- und auslaufseitigen Ende erreicht.

Mit den Merkmalen des Anspruches 15 wird eine grössere Schnittiefe ermöglicht und damit auch die Bearbeitung grösserer Werkstücke.

Eine selbstzentrierende Drahtführung, die ein problemloses Einlegen der Drahtelektrode ermöglicht, ist in Anspruch 16 beschrieben.

Mit Anspruch 17 wird erreicht, dass die Führungsplatte und damit auch der Basisblock potentialfrei gehalten werden können, so dass keine ungewollten Spannungsdurchschläge zwischen Werkstück und Drahtführung bzw. Führungsplatte erfolgen. Ein konstruktiv einfacher Aufbau eines elektrisch isolierten Drahtführungselementes ist in Anspruch 18 beschrieben.

Anspruch 19 stellt eine exakte Justierung der Drahtführungen in Richtung senkrecht zur Drahtelektrode sicher.

Mit den Ansprüchen 20 bis 22 wird eine einfache Spülung des Schneidspaltes sichergestellt.

Mit den Merkmalen der Ansprüche 23 bis 25 wird eine sichere Führung der Drahtelektrode auch dann erreicht, wenn nicht-geradlinige Schnitte durchgeführt werden, wobei mit Anspruch 25 auch eine leichte Anpassung an unterschiedliche Werkstückdicken möglich ist.

Mit den Merkmalen der Ansprüche 26 bis 28 können schliesslich an jedem Werkstück gleichzeitig mehrere Schnitte durchgeführt werden sowie mehrere Teile gleichzeitig geschnitten werden.

Im folgenden wird die Erfindung anhand von Ausführungsbeispielen im Zusammenhang mit der Zeichnung ausführlicher erläutert. Es zeigt :

Fig. 1 eine perspektivische Ansicht einer Drahtführungsanordnung nach der Erfindung ;

Fig. 2 eine perspektivische Ansicht eines Drahtführungselementes nach einem Ausführungsbeispiel der Erfindung ;

Fig. 3 einen Schnitt eines Drahtführungselementes gemäss Fig. 2 ;

Fig. 4 eine teilweise abgeschnittene, perspektivische Darstellung zur Erläuterung der Befestigung eines Drahtführungselementes der Fig. 2 und 3 an einer Führungsplatte ;

Fig. 5 eine Draufsicht auf ein dreieckiges Drahtführungselement zur Erläuterung dessen Befestigung auf der Führungsplatte ;

Fig. 6 eine perspektivische Ansicht - ähnlich Fig. 1 - einer Drahtführungsanordnung nach einer Weiterbildung der Erfindung ;

Fig. 7-9 schematische Seitenansichten von Drahtführungsanordnungen gemäss weiteren Ausgestaltungen der Erfindung ; und

Fig. 10 eine perspektivische Ansicht eines weiteren Ausführungsbeispieles der Erfindung mit drehbaren Drahtführungen.

Gleiche Bezugszeichen in den einzelnen Figuren bezeichnen gleiche oder einander entsprechende Teile.

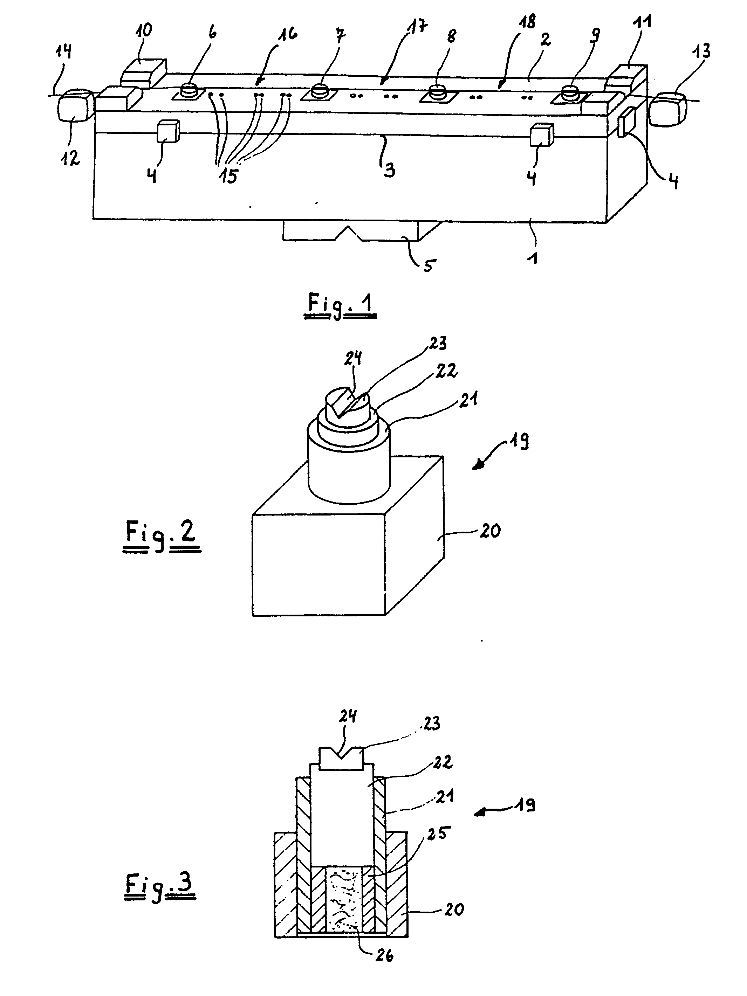

Fig. 1 zeigt einen Basisblock 1, der mit einem herkömmlichen Positionier- und Fixiersystem auf der Elektroerosionsmaschine positioniert und fixiert ist. Auf einer Seite dieses Basisblocks ist eine Führungsplatte 2 befestigt, wobei die Oberseite des Basisblocks 1 und die Unterseite der Führungsplatte 2 eine gemeinsame Referenzebene 3 bilden. Die Führungsplatte 2 ist mit Zentriermitteln 4 an dem Basisblock 1 zentriert und mittels nicht dargestellter Schrauben befestigt, wobei das Positionier- und Fixiersystem des Basisblocks 1 mit dem Bezugszeichen 5 angedeutet ist.

In Längsrichtung der Führungsplatte 2 sind nun mehrere Drahtführungen 6, 7, 8 und 9 angeordnet, die längs einer geraden Linie im Abstand zueinander liegen. Beidseitig der beiden äusseren Drahtführungen 6 und 9 sind ein- und auslaufseitige Vorzentriereinheiten 10 und 11 vorhanden. An der Ein- und Auslaufseite der Führungsplatte sind Stromzuführungseinheiten 12 und 13 vorgesehen, die eine Drahtelektrode 14 mit der für das Elektroerodieren benötigten elektrischen Energie versorgen.

In dem Ausführungsbeispiel der Fig. 1 liegen die dargestellten vier Drahtführungen 6, 7, 8, 9 exakt auf einer geraden Linie, in welcher auch die Drahtelektrode 14 liegt.

Weiterhin sind an der Führungsplatte 2 gegenüberliegend zur Drahtelektrode angeordnete Spüllöcher 15 zu erkennen, über die die zum Elektroerodieren benötigte Flüssigkeit zu- und/oder abgeführt werden kann. Die Spüllöcher 15 münden in - nicht dargestellte - Kanäle im Basisblock, die dort so verlaufen können, dass nur ein einziger Druck- und-/oder Sauganschluss benötigt wird. Der Basisblock dient damit also auch als Spülflüssigkeitsverteiler.

Zwischen den einzelnen Drahtführungen 6 und 7, 7 und 8 sowie 8 und 9 werden hier drei Arbeitszonen 16, 17 und 18 gebildet, wobei in jeder dieser Arbeitszonen ein oder auch mehrere Werkstücke bearbeitet werden können.

Der wechselseitige Abstand benachbarter Drahtführungen hängt einerseits von der dicke der zu bearbeitenden Werkstücke und andererseits auch von der gewünschten Schneidpräzision ab. Bei hoher gewünschter Schneidpräzision wird man die Abstände benachbarter Drahtführungen nur geringfügig grösser als die Werkstückdicke machen, bei geringeren Anforderungen an die Präzision können zwischen zwei benachbarten Drahtführungen auch zwei oder mehr Werkstücke geschnitten werden.

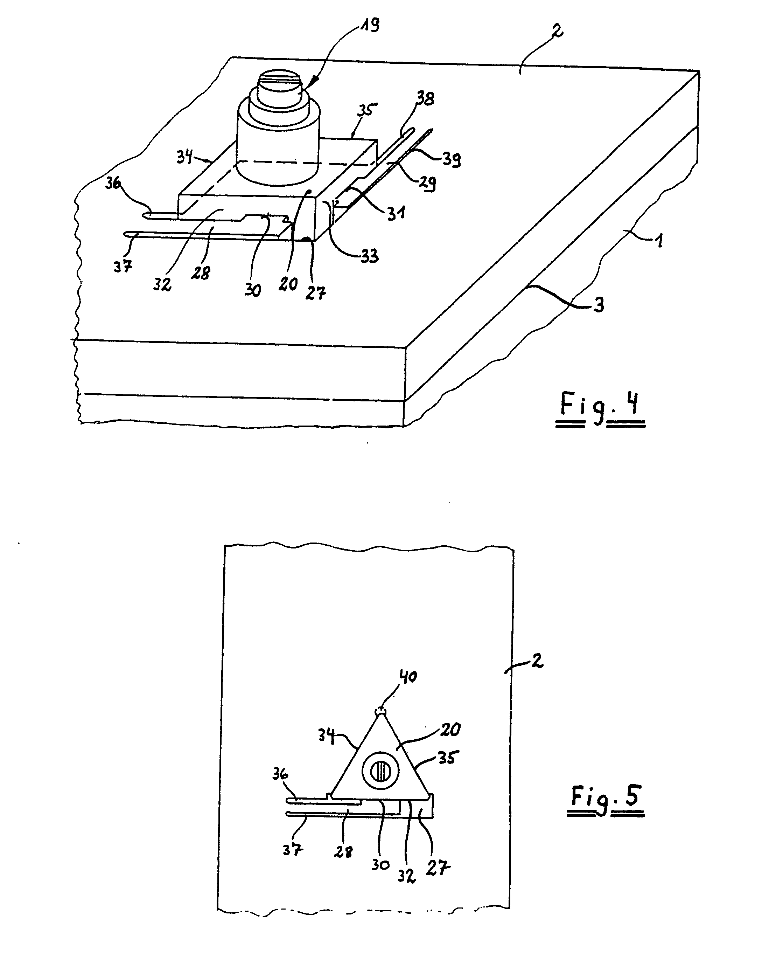

Fig. 2 und 3 zeigen eine perspektivische und eine geschnittene Ansicht eines einzelnen Drahtführungselementes 19. Je ein solches Drahtführungselement bildet eine der Drahtführungen 6, 7, 8, 9 der Fig. 1. Das Drahtführungselement 19 der Fig. 2 und 3 besitzt einen quadratischen Grundkörper 20, der - wie detaillierter im Zusammenhang mit Fig. 4 beschrieben wird - in die Führungsplatte 2 (Fig. 1) einsetzbar ist. Der Grundkörper 20 weist eine mittige, runde Durchgangsöffnung auf, in die ein rohr- bzw. hülsenförmiger Isolierkörper 21 eingesetzt ist, der mit einem Teil seiner axialen Länge aus dem Grundkörper 20 herausragt. In der Durchgangsöffnung des Grundkörpers 20 ist der Isolierkörper festgehalten, beispielsweise mittels einer Presspassung oder durch Verkleben. Im Inneren des Isolierkörpers 21 ist ein zylindrisches Aufnahmeelement 22 gehalten, das an seiner oberen Stirnseite eine Halterung für ein Führungselement 23 aufweist. Das Führungselement 23 ist aus verschleissfestem Material und besitzt an seiner nach oben weisenden Seite eine V-förmige Nut 24, in welcher die Drahtelektrode 14 geführt ist.

Im dargestellten Ausführungsbeispiel ist die untere Stirnseite des Aufnahmeelementes 22 an einem weiteren, rohr- bzw. hülsenförmigen Isolierkörper 25 abgestützt, der mit seinem Aussenmantel an der Innenfläche des Isolierkörpers 21 anliegt. Zusätzlich ist das Innere des weiteren Isolierkörpers 25 mit Isoliermasse 26 ausgefüllt, um nach unten hin eine einwandfreie Isolierung zu gewährleisten und das Eindringen von elektrolytischer Spülflüssigkeit zu verhindern.

Im dargestellten Ausführungsbeispiel enden die beiden Isolierkörper 21 und 25 sowie die Isoliermasse 26 oberhalb der Grundfläche des Grundkörpers 20 (vgl. Fig. 3). Damit ist sichergestellt, dass nur der Grundkörper 20 mit seiner Unterseite eine "Bezugsebene" bildet, während die unteren Enden der Isolierkörper 21 und 25 sowie der Isoliermasse 26 oberhalb dieser Ebene liegen. Damit ist eine präzise Ausrichtung des Drahtführungselementes 19 gegenüber der Führungsplatte 2 bzw. dem Basisblock 1 möglich, da das Drahtführungselement 19 so in die Führungsplatte 2 eingesetzt wird, dass die nach unten weisende Fläche des Grundkörpers 20 in der Referenzebene 3 (Fig. 1) liegt.

Fig. 4 zeigt die Befestigung eines Drahtführungselementes 19 an der Führungsplatte 2. Die Führungsplatte 2 besitzt eine durchgehende Oeffnung 27, die der Kontur des Grundkörpers 20 angepasst ist. Hierbei liegt der Grundkörper mit zwei benachbarten Seitenflächen 34 und 35 an entsprechend ausgerichteten Flächen der Oeffnung 27 an. Die beiden anderen Seitenflächen 32 und 33 des Grundkörpers 20 werden durch Federelemente 28 und 29 in Richtung der Flächen 34 und 35 gedrückt. Damit dienen die beiden Flächen 34 und 35 als Referenzflächen, die eine eindeutige Positionierung des Drahtführungselementes 19 in der Ebene der Führungsplatte 2 sicherstellen. In vertikaler Richtung, also senkrecht zur Ebene der Führungsplatte 2 erfolgt die Ausrichtung des Drahtführungselementes 19 - wie beschrieben - dadurch, dass die Unterseite des Grundkörpers 20 so weit durch die Oeffnung 27 hindurchgeschoben ist, dass sie auf dem Basisblock 1 bzw. der Referenzebene 3 aufliegt.

Die Federelemente 28 und 29 sind jeweils einstückig in die Führungsplatte 2 integriert, indem aus dem Material der Führungsplatte 2 durch Schnitte 36 und 37 bzw. 38 und 39 einstückig mit der Führungsplatte verbundene Federarme ausgeschnitten sind, was beispielsweise durch Schneiderosion erfolgen kann. Die Federarme liegen hierbei im wesentlichen parallel zu den Flächen 32 und 33 und weisen in der Nähe ihres freien Endes Andruckflächen 30 bzw. 31 auf, die gegen die zugeordnete Fläche 32 bzw. 33 des Grundkörpers 20 drücken. Diese Andruckflächen 30 und 31 sind also nach innen gerichtete Vorsprünge der Federarme. Die Federarme sind in ihrer Länge so bemessen, dass ihre Andruckflächen 30 und 31 etwa mittig an den zugeordneten Flächen 32 bzw. 33 des Grundkörpers 20 angreifen. Weiterhin sind sie in ihrer Länge so bemessen, dass die gewünschte Federkennlinie entsteht. Hierzu sind die Federarme seitlich über die Grundfläche der Oeffnung 27 hinaus erstreckt, nämlich um die Länge der Schlitze 36 bzw. 38.

Mit dieser Anordnung können die Drahtführungselemente einfach und ohne Justierarbeiten ausgewechselt werden. Natürlich müssen die Referenzflächen 34 und 35 und die V-Nut 24 des Führungselementes 23 in ihrer wechselseitigen räumlichen Lage eng toleriert sein und ebenso die Gesamthöhe des Drahtführungselementes.

Eine abgewandelte Variante der Form des Grundkörpers 20 und der Oeffnung 27 der Führungsplatte 2 ist in Fig. 5 gezeigt. Beide sind hier dreieckig ausgebildet, so dass auch nur noch ein Federelement 28 benötigt wird, welches den Grundkörper 20 gegen die im spitzen Winkel zueinander stehenden Referenzflächen 34 und 35 drückt. Um im Bereich der "Spitze" zwischen den Referenzflächen 34 und 35 keine Justierprobleme, beispielsweise durch Verschmutzungen, zu bekommen, ist dort die Oeffnung 27 mit einer Aufweitung 40 versehen, so dass die Spitze des Dreieckes dort nicht an der Führungsplatte 2 anliegt.

Das geschilderte Dreieck kann ein gleichschenkliges Dreieck sein ; es kann aber auch gleichseitig sein.

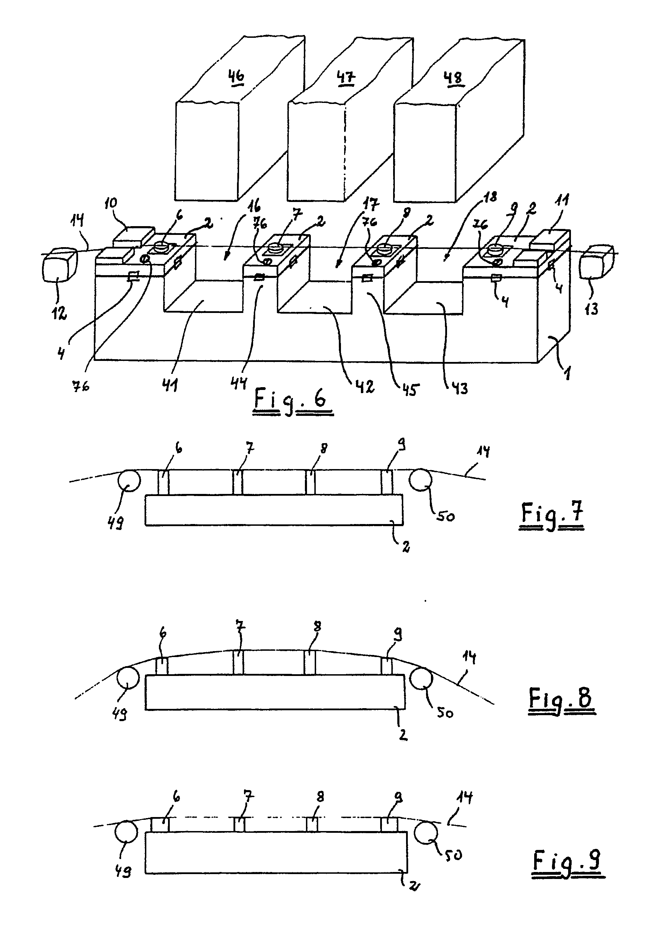

Fig. 6 zeigt eine weitere Variante der Erfindung in perspektivischer Darstellung ähnlich Fig. 1. Im Unterschied zur Fig. 1 sind zwischen benachbarten Drahtführungen 6, 7 bzw. 7, 8 bzw. 8, 9 aus dem Material der Führungsplatte 2 Vertiefungen 41, 42, 43 ausgeschnitten, womit die Schnittiefe vergrössert werden kann. Die mittleren Drahtführungen 7 und 8 sind damit an Stegen 44 bzw. 45 gehalten. Damit ist dann die Führungsplatte 2 in mehrere Abschnitte unterteilt, die jeweils an den Stegen 44, 45 und den seitlichen Vorsprüngen der Grundplatte angeschraubt sind (vgl. Schrauben 76).

Die Figuren 7, 8 und 9 zeigen weitere Ausgestaltungen der Erfindung. In Fig. 7 sind alle vier dargestellten Drahtführungen 6, 7, 8, 9 gleich hoch, so dass die Drahtelektrode im gesamten Arbeitsbereich exakt eine gerade Linie bildet. Ebenso liegen ein- und auslaufseitige Führungsrollen 49 und 50 so ausgerichtet, dass die Drahtelektrode 14 bis zu ihnen geradlinig verläuft.

In Fig. 8 sind die beiden mittleren Drahtführungen 7 und 8 dagegen höher als die ein- und auslaufseitigen Drahtführungen 6 bzw. 9 und diese wiederum höher als die Drahtführungsrolle 49 und 50. Damit wird die Drahtelektrode 14 in den einzelnen Erosionsabschnitten besser gespannt.

Bei der Variante der Fig. 9 liegen alle Drahtführungen 6, 7, 8 und 9 wieder auf einer Linie, während die Drahtführungsrollen 49 und 50 etwas unterhalb dieser Linie liegen. Zusätzlich sind die beiden ein- und auslaufseitigen Drahtführungen 6 und 9 länger (in Elektrodenlängsrichtung) als die beiden mittleren Drahtführungen 7 und 8.

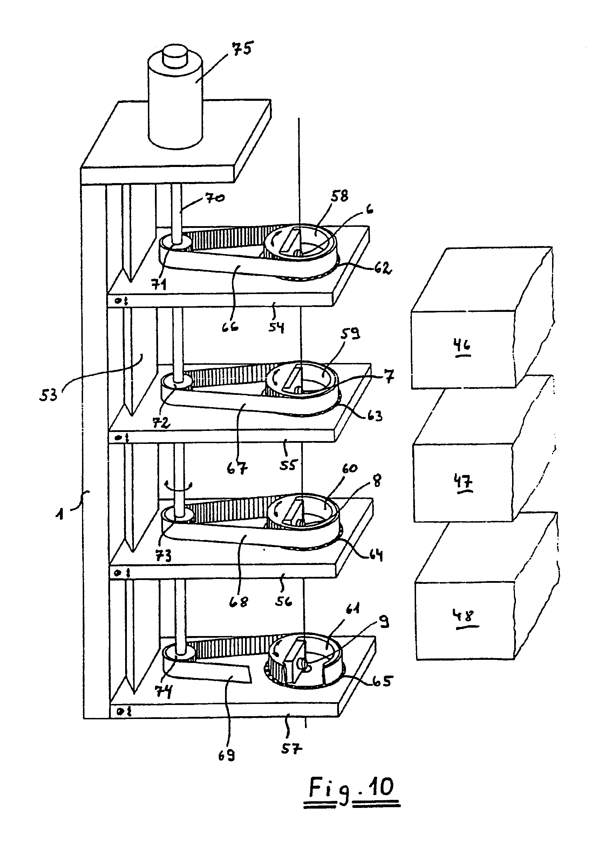

Fig. 10 zeigt eine weitere Variante der Erfindung, bei der die einzelnen Drahtführungen 6, 7, 8, 9 zur jeweiligen Schnittrichtung ausgerichtet werden können.

Hierzu sind die einzelnen Drahtführungselemente in drehbaren Trommeln 58, 59, 60 bzw. 61 fixiert und innerhalb der Trommel so ausgerichtet, dass die "Spitze" der V-förmigen Nut 24 (Fig. 3) im Drehmittelpunkt der Trommel liegt.

Jede Trommel ist an einer Halteplatte 54, 55, 56 bzw. 57 mittels eines Lagers 62, 63, 64 bzw. 65 drehbar gelagert und kann über ein Antriebsorgan 66, 67, 68 bzw. 69, das beispielsweise ein Zahnriemen ist, gedreht werden, womit die jeweilige Drahtführung und damit ihre V-förmige Nut so ausgerichtet werden kann, dass unabhängig von der Schnittrichtung die Drahtelektrode 14 stets in die Nut gedrückt wird. Die einzelnen Antriebsorgane werden von einer gemeinsamen Welle 70 angetrieben und zwar mittels drehfest mit der Welle 70 verbundenen Antriebsrädern 71, 72, 73 bzw. 74. Die Welle 70 wird dabei von einem Motor 75 angetrieben, der beispielsweise ein elektrischer Schrittmotor ist.

Die Halteplatten 54, 55, 56 bzw. 57 sind in diesem Falle an der Grundplatte 1 gehalten, beispielsweise mittels einer Schwalbenschwanzführung 53. Damit ist es dann auch möglich, die wechselseitigen Abstände der Halteplatten und damit der Drahtführungen zu verändern, wobei selbstverständlich sichergestellt ist, dass auch die Antriebsräder 71 bis 74 dann zusammen mit der jeweiligen Halteplatte längs der gemeinsamen Welle verschiebbar sind, beispielsweise durch ein Nut- und Federverbindung, eine Schraubverbindung oder eine Verzahnung. Mit einer solchen Anordnung werden die Einsatzmöglichkeiten der Maschine vergrössert, da einerseits eine Anpassung an unterschiedliche Werkstückdicken möglich ist und andererseits auch die Schnittrichtung beliebig geändert werden kann, gleichwohl aber eine einwandfreie Führung und Halterung der Drahtelektrode 14 sicherge-

stellt ist.

## Ansprüche

1. Drahtführungsanordnung zur Führung mit einlauf- und auslaufseitigen Drahtführungen (6, 9) einer Draht-elektrode (14) einer Elektroerosionsmaschine, bei der mehrere Werkstücke gleichzeitig mittels der einen Drahtelektrode (14) geschnitten werden, dadurch gekennzeichnet, dass die Drahtelektrode (14) von wernigstens einer weiteren Drahtführung (7, 8) geführt ist, die zwischen den Werstucken angeordnet ist.

2. Drahtführungsanordnung nach Anspruch 1, dadurch gekennzeichnet, dass die Anzahl (n) der Drahtführungen (6, 7, 8, 9) in der Erosionszone um 1 grösser ist als die Anzahl (n-1) der gleichzeitig zu schneidenden Werkstücke (46, 47, 48).

3. Drahtführungsanordnung nach einem der Ansprüche 1 oder 2, dadurch gekennzeichnet, dass jede Drahtführung (6 bis 9) ein Drahtführungselement (19) aufweist, das einen Grundkörper (20) mit ebenen Seitenwänden (32, 33, 34, 35) besitzt, dass eine Führungsplatte (2) der Kontur der Grundkörper (20) angepasste Oeffnungen (27) aufweist, derart, dass jeder Grundkörper (20) an zwei ebenen Zentrierflächen (34, 35) der Oeffnung (27) anliegt und dass jeder Grundkörper (20) mittels Federkraft (28, 29) gegen die Zentrierflächen gedrückt ist.

4. Drahtführungsanordnung nach Anspruch 3, dadurch gekennzeichnet, dass der Grundkörper (20) in der Draufsicht rechteckig, vorzugsweise quadratisch ist.

5. Drahtführungsanordnung nach Anspruch 3, dadurch gekennzeichnet, dass der Grundkörper (20) in der Draufsicht dreieckig ist, vorzugsweise ein gleichseitiges Dreieck.

6. Drahtführungsanordnung nach einem der Ansprüche 3 bis 5, dadurch gekennzeichnet, dass zur Erzeugung der Federkraft in den jeweiligen Oeffnungen (27) der Führungsplatte (2) mindestens eine aus dem Material der Führungsplatte (2) einstückig gebildete Feder (28, 29) vorhanden ist.

7. Drahtführungsanordnung nach Anspruch 6, dadurch gekennzeichnet, dass die Feder(n) (28, 29) als einstückig aus dem Material der Führungsplatte (2) gebildeter, federnder Arm ausgebildet ist, der im wesentlichen parallel zu der mit der Federkraft zu beaufschlagenden Fläche (32, 33) verläuft.

8. Drahtführungsanordnung nach Anspruch 7, dadurch gekennzeichnet, dass am freien Ende des federnden Armes eine in Richtung zur gegenüberliegenden Fläche (32, 33) des Grundkörpers (20) vorspringende Andruckfläche (30, 31) vorgesehen ist, deren Fläche kleiner ist als das Fläche der gegenüberliegenden, mit der Feder in Berührung stehenden Fläche (32, 33) des Grundkörpers (20).

9. Drahtführungsanordnung nach Anspruch 7 oder 8, dadurch gekennzeichnet, dass der Federarm länger ist als die Hälfte der Längsseite der mit der Feder in Berührung stehenden Fläche (32, 33) des Grundkörpers, wobei die Andruckfläche (30, 31) der Feder etwa in der Mitte der zugeordneten Fläche des Grundkörpers (20) anliegt.

10. Drahtführungsanordnung nach einem der Ansprüche 5 bis 9, dadurch gekennzeichnet, dass bei in Draufsicht dreieckigem Grundkörper (20) nur eine einzige Feder (28) vorgesehen ist.

11. Drahtführungsanordnung nach einem der Ansprüche 1 bis 10, dadurch gekennzeichnet, dass beidseitig der beiden äusseren Drahtführungen (6, 9) jeweils zusätzliche Vorzentriereinheiten (10, 11) für die Drahtelektrode (14) vorgesehen sind.

12. Drahtführungsanordnung nach einem der Ansprüche 1 bis 11, dadurch gekennzeichnet, dass die mittlere(n) Drahtführung(en) (7, 8) höher sind als die Drahtführungen (6, 9) am Ein- und Auslauf.

13. Drahtführungsanordnung nach einem der Ansprüche 1 bis 12, dadurch gekennzeichnet, dass die Drahtführungen (6, 9) am Ein- und Auslauf der Drahtelektrode in Längsrichtung derselben länger. sind als die mittleren Drahtführungen (7, 8).

14. Drahtführungsanordnung nach einem der Ansprüche 1 bis 13, dadurch gekennzeichnet, dass die Führungsplatte (2) zwischen benachbarten Drahtführungen (6, 7 ; 7, 8 ; 8, 9) Ausnehmungen bzw. Vertiefungen (41, 42, 43) aufweist.

15. Drahtführungsanordnung nach einem der Ansprüche 1 bis 14, dadurch gekennzeichnet, dass die Drahtführungen (6, 7, 8, 9) je ein Führungselement (23) aufweisen, das eine V-förmige Nut (24) zur Aufnahme der Drahtelektrode (14) aufweist.

16. Drahtführungsanordnung nach Anspruch 15, dadurch gekennzeichnet, dass das Führungselement (23) jedes Drahtführungselementes (19) gegenüber dessen Grundkörper (20) elektrisch isoliert ist.

17. Drahtführungsanordnung nach Anspruch 16, dadurch gekennzeichnet, dass jedes Führungselement (23) an einem zylindrischen Aufnahmeelement (22) befestigt ist, welches seinerseits in einem rohrförmigen Isolierkörper (21) gehalten ist, der seinerseits in einer Oeffnung des Grundkörpers (20) gehalten ist.

18. Drahtführungsanordnung nach Anspruch 17, dadurch gekennzeichnet, dass das untere Ende des Aufnahmeelementes (22) an einem weiteren, rohrförmigen Isolierkörper (25) aufsitzt, welcher mit Isoliermasse (26) gefüllt ist.

19. Drahtführungsanordnung nach einem der Ansprüche 1 bis 18, dadurch gekennzeichnet, dass die dem Drahtführungselement abgewandte Seite des Grundkörpers (20) jeder Drahtführung (6, 7, 8, 9) als ebene Justierfläche zur vertikalen Ausrichtung senkrecht zur Drahtelektrode (14) ausgebildet ist.

20. Drahtführungsanordnung nach einem der Ansprüche 1 bis 19, dadurch gekennzeichnet, dass in der Führungsplatte (2) Saug- und/oder Druckspüllöcher (15) für Spülflüssigkeit vorhanden sind.

21. Drahtführungsanordnung nach Anspruch 20, dadurch gekennzeichnet, dass im Basisblock (1) Kanäle zur Saug- und/oder Druckspülung vorhanden sind, welche in die Spüllöcher (15) der Führungsplatte (2) münden.

22. Drahtführungsanordnung nach Anspruch 21, dadurch gekennzeichnet, dass die Kanäle in dem Basisblock (1) so verteilt sind, dass nur ein Saug- oder Druckanschluss benötigt ist, um alle Erosionszonen zu spülen.

23. Drahtführungsanordnung nach einem der Ansprüche 1 bis 22, dadurch gekennzeichnet, dass die einzelnen Drahtführungen (6, 7, 8, 9) zur Anpassung an die Schnittrichtung um eine mit der Drahtelektrode (14) übereinstimmende Achse drehbar gelagert sind.

24. Drahtführungsanordnung nach Anspruch 23, dadurch gekennzeichnet, dass die Drahtführungen (6, 7, 8, 9) an der Innenseite von drehbar gelagerten (Lager 62, 63, 64, 65) Trommeln (58, 59, 60, 61) befestigt sind, wobei alle Trommeln über einen gemeinsamen Antrieb (Motor 75 ; Welle 70, Treiborgane 66, 67, 68, 69) drehbar sind.

25. Drahtführungsanordnung nach Anspruch 24, dadurch gekennzeichnet, dass die Trommeln (58, 59, 60, 61) an vom Basisblock senkrecht abstehenden Platten (54, 55, 56, 57) befestigt sind, wobei diese Platten (54, 55, 56, 57) in Längsrichtung der Drahtelektrode (14) verschiebbar sind.

26. Drahtführungsanordnung nach eine der Ansprüche 1 bis 25, dadurch gekennzeichnet, dass mehrere, vorzugsweise parallel zueinander verlaufende Drahtelektroden (14) vorhanden sind.

27. Drahtführungsanordnung nach Anspruch 26, dadurch gekennzeichnet, dass alle Drahtführungen auf einer einzigen Führungsplatte angeordnet sind.

28. Drahtführungsanordnung nach Anspruch 26, dadurch gekennzeichnet, dass die Drahtführungen für jede Drahtelektrode auf einer eigenen Führungsplatte befestigt sind, wobei jede Führungsplatte auf dem Basisblock (1) fixiert ist.

**Claims**

1. Wire guide arrangement with wire guides (6, 9) at the inlet and outlet side for guiding a wire electrode (14) of an electroerosion machine, in which a plurality of work-pieces are cut simultaneously by means of the one wire electrode (14), characterised in that the wire electrode (14) is guided by at least one further wire guide (7, 8), which is disposed between the work-pieces.

2. Wire guide arrangement according to Claim 1, characterised in that the number(s) of the wire guides (6, 7, 8, 9) in the erosion zone is greater by 1 than the number (n-1) of the work-pieces (46, 47, 48) to be cut simultaneously.

3. Wire guide arrangement according to one of Claims 1 or 2, characterised in that each wire guide (6 to 9) comprises a wire guide member (19), which has a base member (20) with flat side walls (32, 33, 34, 35), that a guide plate (2) comprises openings (27) adapted to the contour of the base member (20) so that each base member (20) bears against two flat centering surfaces (34, 35) of the opening (27) and that each base member (20) is pressed by means of spring force (28, 29) against the centering surfaces.

4. Wire guide arrangement according to Claim 3, characterised in that in plan view the base member (20) is rectangular, preferably square.

5. Wire guide arrangement according to Claim 3, characterised in that in plan view the base member (20) is triangular, preferably an equilateral triangle.

6. Wire guide arrangement according to one of Claims 3 to 5, characterised in that in order to produce the spring force in the respective openings (27) of the guide plate (2), at least one spring (28, 29) formed in one piece from the material of the guide plate (2) is provided.

7. Wire guide arrangement according to Claim 6, characterised in that the spring(s) (28, 29) is constructed as a resilient arm formed in one piece from the material of the guide plate (2), which arm extends substantially parallel to the surface (32, 33) to be acted upon by spring force.

8. Wire guide arrangement according to Claim 7, characterised in that provided at the free end of the resilient arm is a pressure surface (30, 31) projecting in the direction towards the opposite surface (32, 33) of the base member (20), the area of which surface (30, 31) is smaller than that of the opposite surface (32, 33) of the base member (20), which is in contact with the spring.

9. Wire guide arrangement according to Claim 7 or 8, characterised in that the spring arm is longer than half the longitudinal side of the surface (32, 33) of the base member, which is in contact with the spring, the pressure surface (30, 31) of the spring bearing approximately in the centre of the associated surface of the base member (20).

10. Wire guide arrangement according to one of Claims 5 to 9, characterised in that in the case of a base member (20) which is triangular in plan view, only a single spring (28) is provided.

11. Wire guide arrangement according to one of Claims 1 to 10, characterised in that provided on both sides of the two outer wire guides (6, 9) respectively are additional pre-centering units (10, 11) for the wire electrode (14).

12. Wire guide arrangement according to one of Claims 1 to 11, characterised in that the central wire guide(s) (7, 8) are higher than the wire guides (6, 9)

13. Wire guide arrangement according to one of Claims 1 to 12, characterised in that the wire guides (6, 9) at the inlet and outlet of the wire electrode in the longitudinal direction thereof are longer than the central wire guides (7, 8).

14. Wire guide arrangement according to one of Claims 1 to 13, characterised in that between adjacent wire guides (6, 7 ; 7, 8 ; 8, 9), the guide plate (2) comprises recesses or cavities (41, 42, 43).

15. Wire guide arrangement according to one of Claims 1 to 14, characterised in that the wire guides (6, 7, 8, 9) each comprise a guide member (23), which comprises a V-shaped groove (24) for receiving the wire electrode (14).

16. Wire guide arrangement according to Claim 15, characterised in that the guide member (23) of each wire guide member (19) is electrically insulated with respect to its base member (20).

17. Wire guide arrangement according to Claim 16, characterised in that each guide member (23) is attached to a cylindrical receiving member (22), which is in turn held in a tubular insulating member (21), which is in turn held in an opening in the base member (20).

18. Wire guide arrangement according to Claim 17, characterised in that the lower end of the receiving member (22) is seated on a further, tubular insulating member (25), which is filled with insulating material (26).

19. Wire guide arrangement according to one of Claims 1 to 18, characterised in that the side of the base member (20) of each wire guide (6, 7, 8, 9), which side is remote from the wire guide member, is constructed as a flat adjustment surface for the vertical alignment perpendicular to the wire electrode (14).

20. Wire guide arrangement according to one of Claims 1 to 19, characterised in that suction and/or pressure rinsing holes (15) for rinsing liquid are present in the guide plate (2).

21. Wire guide arrangement according to Claim 20, characterised in that provided in the base block (1) are channels for suction and/or pressure rinsing, which channels open into the rinsing holes (15) in the guide plate (2).

22. Wire guide arrangement according to Claim 21, characterised in that the channels are distributed in the base block (1) so that only one suction or pressure connection is required, in order to rinse all erosion zones.

23. Wire guide arrangement according to one of Claims 1 to 22, characterised in that for adaptation to the cutting direction, the individual wire guides (6, 7, 8, 9) are mounted to rotate about an axis coinciding with the wire electrode (14).

24. Wire guide arrangement according to Claim 23, characterised in that the wire guides (6, 7, 8, 9) are attached to the inside of drums (58, 59, 60, 61), which are mounted to rotate (bearings 62, 63, 64, 65), all the drums being able to be rotated by way of a common drive (motor 75 ; shaft 70, driving members 66, 67, 68, 69).

25. Wire guide arrangement according to Claim 24, characterised in that the drums (58, 59, 60, 61) are attached to plates (54, 55, 56, 57) projecting perpendicularly from the base block, these plates (54, 55, 56, 57) being able to slide in the longitudinal direction of the wire electrode (14).

26. Wire guide arrangement according to one of Claims 1 to 25, characterised in that a plurality of wire electrodes (14) are provided, preferably extending parallel to each other.

27. Wire guide arrangement according to Claim 26, characterised in that all the wire guides are disposed on a single guide plate.

28. Wire guide arrangement according to Claim 26, characterised in that the wire guides for each wire electrode are attached to an individual guide plate, each guide plate being fixed to the base block (1).

## Revendications

1. Dispositif de guidage de fil destiné au guidage, au moyen de guidages de fil (6, 9) d'entrée et de sortie, d'une électrode en fil (14) de machine à électro-érosion, dans lequel plusieurs pièces à usiner peuvent simultanément être coupés au moyen d'une électrode en fil (14), caractérisé en ce que l'électrode en fil (14) est guidée au moyen d'un autre guidage de fil (7, 8), qui est disposé entre les pièces à usiner.

2. Dispositif de guidage de fil selon la revendication 1, caractérisé en ce que le nombre (n) des guidages de fil (6, 7, 8, 9) de la zone d'érosion est supérieur de 1 au nombre (n-1) des pièces à usiner (46, 47, 48) qui doivent subir simultanément une coupe.

3. Dispositif de guidage de fil selon l'une des revendications 1 ou 2, caractérisé en ce que chaque passage de fil (6 à 9) présente un élément de guidage de fil (19) qui possède un corps de base (20) comportant des parois latérales planes (32, 33, 34, 35), en ce qu'une plaque de guidage (2) présente des ouvertures (27) adaptées au contour des corps de base (20), de façon telle que chaque corps de base (20) soit placé contre deux surfaces de centrage planes (34, 35) de l'ouverture (27) et en ce que chaque corps de base (20) est poussé sous l'effet d'une force de ressort (28, 29) contre les surfaces de centrage.

4. Dispositif de guidage de fil selon la revendication 3, caractérisé en ce que le corps de base (20) a, vu en plan par le dessus, une forme rectangulaire, de préférence carrée.

5. Dispositif de guidage de fil selon la revendication 3, caractérisé en ce que le corps de base (20) a, vu en plan par le dessus, une forme triangulaire, de préférence équilatérale.

6. Dispositif de guidage de fil selon l'une des revendications 3 à 5, caractérisé en ce qu'en vue de créer la force de ressort dans chacune des ouvertures (27) de la plaque de guidage (2), il y a au moins un ressort (28, 29) qui forme une seule pièce avec le matériau de la plaque de guidage (2).

7. Dispositif de guidage de fil selon la revendication 6, caractérisé en ce que le(s) ressort(s) (28, 29) est (sont) constitué(s) par un bras formant ressort, réalisé en une seule pièce avec le matériau de la plaque de guidage (2), ce bras étant disposé sensiblement parallèlement à la surface (32, 33) qui doit être soumise à la force de ressort.

8. Dispositif de guidage de fil selon la revendication 7, caractérisé en ce qu'à l'extrémité libre du bras formant ressort, est prévue une surface d'appui (30, 31), faisant saillie (20) dans la direction de la surface (32, 33) opposée du corps de base, dont la surface est plus petite que celle de la surface (32, 33) du corps de base (20) située en face et qui est en contact avec le ressort.

9. Dispositif de guidage de fil selon la revendication 7 ou 8, caractérisé en ce que le bras formant ressort a une longueur égale à la moitié du côté longitudinal de la surface (32, 33) du corps de base qui se trouve en contact avec le ressort, la surface d'appui (30, 31) du ressort étant placée contre la surface correspondante du corps de base (20) à peu près au milieu de celle-ci.

10. Dispositif de guidage de fil selon l'une des revendications 5 à 9, caractérisé en ce que dans le corps de base (20) triangulaire, vu en plan par le dessus, un seul ressort (28) est prévu.

11. Dispositif de guidage de fil selon l'une des revendications 1 à 10, caractérisé en ce que des deux côtés de deux guidages de fil extérieurs (6, 9), sont prévues des unités de centrage supplémentaires (10, 11) destinées à l'électrode en fil (14).

12. Dispositif de guidage de fil selon l'une des revendications 1 à 11, caractérisé en ce que le(s) guidage(s) de fil médian(s) (7, 8) est (sont) plus élevé(s) que les guidages de fil (6, 9) situés à l'entrée et à la sortie.

13. Dispositif de guidage de fil selon l'une des revendications 1 à 12, caractérisé en ce que les guidages de fil (6 à 9) situés à l'entrée et à la sortie de l'électrode en fil sont plus longs, dans le sens longitudinal de celle-ci, que les guidages de fil médians (7, 8).

14. Dispositif de guidage de fil selon l'une des revendications 1 à 13, caractérisé en ce que la plaque de guidage (2) présente entre deux guidages de fil voisins (6, 7 ; 7, 8 ; 8, 9) des creux, ou cavités (41, 42, 43).

15. Dispositif de guidage de fil selon l'une des revendications 1 à 14, caractérisé en ce que les guidages de fil (6, 7, 8, 9) présentent chacun un élément de guidage (23), qui comporte une gorge (24) en forme de V, destinée au logement de l'électrode en fil (14).

16. Dispositif de guidage de fil selon la revendication 15, caractérisé en ce que l'élément de guidage (23) de chaque élément de guidage de fil (19) est isolé électriquement par rapport à son corps de base (20).

17. Dispositif de guidage de fil selon la revendication 16, caractérisé en ce que chaque élément de guidage (23) est fixé à un élément de réception cylindrique (22) qui, de son côté est maintenu dans un corps isolant (21) de forme tubulaire qui, à son tour, est maintenu dans une ouverture du corps de base (20).

18. Dispositif de guidage de fil selon la revendication 17, caractérisé en ce que l'extrémité inférieure de l'élément de réception (22) repose sur un autre corps isolant (25) de forme tubulaire, qui est rempli d'une masse isolante (26).

19. Dispositif de guidage de fil selon l'une des revendications 1 à 18, caractérisé en ce que le côté du corps de base (20) opposé à l'élément de guidage et qui est associé à chaque guidage de fil (6, 7, 8, 9) est constitué par une surface plane d'alignement destinée à l'orientation verticale perpendiculairement à l'électrode en fil (14).

20. Dispositif de guidage de fil selon l'une des revendications 1 à 19, caractérisé en ce que dans la plaque de guidage (2) sont prévus des trous de nettoyage (15) par aspiration et/ou par pression, destinés à un liquide de nettoyage.

21. Dispositif de guidage de fil selon la revendication 20, caractérisé en ce que dans le bloc de base (1) sont prévus des canaux destinés au nettoyage par aspiration et/ou par pression, lesquels débouchent dans les trous de nettoyage (15) de la plaque de guidage (2).

22. Dispositif de guidage de fil selon la revendication 21, caractérisé en ce que les canaux sont répartis dans le bloc de base (1) de façon telle qu'il n'y ait besoin que d'un seul raccordement d'aspiration et/ou de pression, pour nettoyer toutes les zones d'érosion.

23. Dispositif de guidage de fil selon l'une des revendications 1 à 22, caractérisé en ce que les différents guidages de fil (6, 7, 8, 9) sont montés à rotation sur un axe qui coïncide avec l'électrode en fil (14), en vue de l'adaptation à la direction de coupe.

24. Dispositif de guidage de fil selon la revendication 23, caractérisé en ce que les guidages de fil (6, 7, 8, 9) sont fixés sur le côté intérieur de tambours (58, 59, 60, 61) montés à rotation (paliers 62, 63, 64, 65), tous les tambours pouvant être mis en rotation par l'intermédiaire d'un entrainement commun (moteur 75 ; arbre 70 ; organes d'entrainement 66, 67, 68, 69).

25. Dispositif de guidage de fil selon la revendication 24, caractérisé en ce que les tambours (58, 59, 60, 61) sont fixés à des plaques (54, 55, 56, 57) qui font saillie perpendiculairement à partir du bloc de base, ces plaques (54, 55, 56, 57) pouvant être déplacées dans le sens longitudinal de l'électrode en fil (14).

26. Dispositif de guidage de fil selon l'une des revendications 1 à 25, caractérisé en ce qu'il y a plusieurs électrodes en fil (14) disposées de préférence parallèlement les unes aux autres.

27. Dispositif de guidage de fil selon la revendication 26, caractérisé en ce que tous les guidages de fil sont disposés sur une plaque de guidage unique.

28. Dispositif de guidage de fil selon la revendication 26, caractérisé en ce que les guidages de fil destinés à chaque électrode en fil sont fixés sur une plaque de guidage qui leur est propre, chaque plaque de guidage étant fixée sur le bloc de base (1).

_Fig. 1_

_Fig. 2_

_Fig. 3_

Fig.4

Fig.5

Fig. 6

Fig. 7

Fig. 8

Fig. 9

Fig. 10